(19) Europäisches Patentamt / European Patent Office / Office européen des brevets

(11) **EP 4 306 592 A1**

(12) **EUROPEAN PATENT APPLICATION**
published in accordance with Art. 153(4) EPC

(43) Date of publication:
**17.01.2024   Bulletin 2024/03**

(21) Application number: **21929435.2**

(22) Date of filing: **12.03.2021**

(51) International Patent Classification (IPC):
*C08L 1/10* (2006.01)

(52) Cooperative Patent Classification (CPC):
**C08L 1/10**

(86) International application number:
**PCT/JP2021/010150**

(87) International publication number:
**WO 2022/190373 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Daicel Corporation**
**Osaka 530-0011 (JP)**

(72) Inventors:
• **KUSUMOTO, Masaaki**
  **Tokyo 108-8230 (JP)**
• **TANIGUCHI, Hiroki**
  **Tokyo 108-8230 (JP)**
• **KAWASAKI, Takafumi**
  **Tokyo 108-8230 (JP)**
• **HIGUCHI, Akihiro**
  **Tokyo 108-8230 (JP)**

(74) Representative: **Müller-Boré & Partner**
**Patentanwälte PartG mbB**
**Friedenheimer Brücke 21**
**80639 München (DE)**

(54) **THERMOPLASTIC RESIN COMPOSITION**

(57)   The thermoplastic resin composition includes a cellulose ester, a polyester, and a plasticizer. The plasticizer has a number average molecular weight of 1000 or less. An amount of the polyester is 120 parts by weight or less per 100 parts by weight of the cellulose ester. An amount of the plasticizer is less than 100 parts by weight per 100 parts by weight of the cellulose ester.

EP 4 306 592 A1

**Description**

Technical Field

The present invention relates to a thermoplastic resin composition. Specifically, the present invention relates to a thermoplastic resin composition including a cellulose ester.

Background Art

Many cellulose esters have poor heat meltability due to hydrogen bonding resulting from hydroxyl groups remaining in a molecular chain thereof. The melting temperature of a cellulose ester tends to be higher as its degree of substitution is lower. On the other hand, as the degree of substitution of a cellulose ester is higher, the crystallinity thereof is higher, and thus the solubility and meltability thereof tend to decrease. A devise has been made that the melting temperature of a cellulose ester is lowered by adding a plasticizer to the cellulose ester, so that processability thereof is improved. However, due to insufficient extensibility and the like of the resulting molded article, there is a problem especially in processability of a cellulose ester into a thin film or sheet.

On the other hand, cellulose esters such as cellulose acetate have biodegradability and are known to degrade by activated sludge. In recent years, there has been a demand for biodegradable molded articles in various technical fields due to growing interest in global environment.

For example, JP 2001-294792 A (Patent Document 1) discloses a biodegradable coating agent including at least one biodegradable resin selected from polylactic acid, cellulose acetate, polyvinyl alcohol, polycaprolactone, polybutylene succinate and polyethylene succinate, and an edible colorant. JP 2003-276094 A (Patent Document 2) discloses a foamed molded article obtained by: kneading a fibrous substance and an aqueous solution of a binder including at least one component selected from polyvinyl alcohol and/or starch, polyethylene glycol, carboxymethyl cellulose, polyethylene succinate, polybutylene succinate, polybutylene succinate adipate, polycaprolactone, cellulose acetate, and polylactic acid; and foaming and molding the kneaded product.

Citation List

Patent Documents

Patent Document 1: JP 2001-294792 A
Patent Document 2: JP 2003-276094 A

Summary of Invention

Technical Problem

The biodegradable coating agent disclosed in Patent Document 1 is intended for use in an ink, a paint or the like, and cannot be applied to a molded article such as a film. The molded article disclosed in Patent Document 2 is a porous body obtained by mixing a fibrous substance and a binder including a biodegradable polymer, and is not a technique applicable to a molded article such as a film formed by melt molding.

An object of the present disclosure is to provide a thermoplastic resin composition that can provide a melt molded article having excellent biodegradability and good extensibility.

Solution to Problem

The thermoplastic resin composition according to an embodiment of the present disclosure includes a cellulose ester, a polyester, and a plasticizer. The plasticizer has a number average molecular weight of 1000 or less. An amount of the polyester is 120 parts by weight or less per 100 parts by weight of the cellulose ester. An amount of the plasticizer is less than 100 parts by weight per 100 parts by weight of the cellulose ester.

Preferably, the cellulose ester has a total degree of substitution of 2.1 or greater and 2.6 or less. Preferably, a degree of substitution at the 2-position and a degree of substitution at the 3-position of the cellulose ester are both greater than a degree of substitution at the 6-position thereof.

Preferably, the plasticizer is one or more selected from citric acid esters, glycerin esters, adipic acid esters and polyethylene glycol esters.

Preferably, the polyester has, as a repeating structure, a structural unit obtained by dehydration condensation of a dicarboxylic acid and a diol. In this polyester, a proportion of a structural unit containing an aromatic ring may be 50% or less with respect to all structural units. Preferably, the dicarboxylic acid is selected from the group consisting of succinic acid, adipic acid and terephthalic acid. Preferably, the diol is selected from the group consisting of ethylene glycol, propylene glycol and butylene glycol.

Preferably, the polyester is selected from the group consisting of polybutylene succinate (PBS), poly(butylene succinate-co-butylene adipate) (PBSA) and polybutylene adipate terephthalate (PBAT).

In the thermoplastic resin composition according to an embodiment of the present disclosure, the cellulose ester may be cellulose acetate.

Advantageous Effects of Invention

The thermoplastic resin composition according to an embodiment of the present disclosure can provide a molded article having excellent biodegradability and good extensibility by melt molding. In particular, the thermoplastic resin composition according to an embodiment of the present disclosure can be suitably used as a material for a melt molded article or an injection molded article, particularly a molded article having a small film thickness, such as a film or a sheet.

Description of Embodiments

Hereinafter, an example of a preferred embodiment will be specifically described. Note that each of the configurations, combinations thereof, and the like in each of the embodiments are an example, and various additions, omissions, substitutions, and other changes may be made as appropriate without departing from the spirit of the present disclosure. The present disclosure is not limited by the embodiments and is limited only by the claims. Each aspect disclosed in the present specification can be combined with any other feature disclosed herein.

In the present specification, "from X to Y" indicating a range means "X or greater and Y or less". Unless otherwise noted, all test temperatures are room temperature (20°C $\pm$ 5°C).

[Thermoplastic resin composition]

The thermoplastic resin composition according to an embodiment of the present disclosure includes a cellulose ester, a polyester, and a plasticizer. The plasticizer has a number average molecular weight of 1000 or less. An amount of the polyester is 120 parts by weight or less per 100 parts by weight of the cellulose ester. An amount of the plasticizer is less than 100 parts by weight per 100 parts by weight of the cellulose ester.

The thermoplastic resin composition includes the above-mentioned amount of the plasticizer, and thus can be melt molded in a relatively low temperature region. Good extensibility is imparted to the obtained molded article by the polyester in the above-mentioned amount in the resin composition. In addition, the cellulose ester and the polyester have good biodegradability. The plasticizer having a number average molecular weight of 1000 or less does not inhibit the biodegradability of the cellulose ester and the polyester. The thermoplastic resin composition according to an embodiment of the present disclosure can provide a molded article having excellent biodegradability and good extensibility. Particularly, a thin film, sheet or the like can be obtained by melt molding the resin composition as a material.

[Cellulose ester]

The cellulose ester has an acyl group as a substituent. Examples of the acyl group include an acetyl group, a propionyl group, a butyryl group, a carboxyl group, a carboxymethyl group, a 2-hydroxyethyl group, a 2-hydroxypropyl group, and a methyl group. From the perspective that good biodegradability can be easily obtained, the substituent of the cellulose ester is preferably an acetyl group, a propionyl group, and a butyryl group, and more preferably an acetyl group. The cellulose ester may have two or more types of acyl groups. The cellulose ester may contain a substituent other than the acyl group as long as the effects of the present disclosure are not impaired.

Specific examples of the cellulose ester included in the thermoplastic resin composition according to an embodiment of the present disclosure include cellulose acetate, cellulose propionate, cellulose butyrate, cellulose acetate propionate, and cellulose acetate butyrate. Cellulose acetate is preferred because a molded article having excellent strength can be obtained.

[Total degree of substitution]

From the perspective of improving the biodegradability, the total degree of substitution of the cellulose ester is preferably 2.6 or less, more preferably 2.5 or less, still more preferably 2.4 or less, and particularly preferably 2.3 or less. From the perspective of high melt fluidity, the total degree of substitution of the cellulose ester is preferably 1.9 or greater, more preferably 2.0 or greater, and particularly preferably 2.1 or greater. A cellulose ester having a total degree of substitution of 1.9 or greater and 2.6 or less is preferred. The total degree of substitution of the cellulose ester may be from 1.9 to 2.5, from 1.9 to 2.4, from 1.9 to 2.3, from 2.0 to 2.6, from 2.0 to 2.5, from 2.0 to 2.4, from 2.0 to 2.3, from 2.1 to 2.6, from 2.1 to 2.5, from 2.1 to 2.4, or from 2.1 to 2.3.

[Degrees of substitution at 2-, 3- and 6-positions]

The degrees of substitution at the 2-, 3-, and 6-positions of the cellulose ester included in the resin composition according to an embodiment of the present disclosure are not particularly limited. However, from the perspective of improving the biodegradability, a cellulose ester in which both the degree of substitution at the 2-position and the degree of substitution at the 3-position are greater than the degree of substitution at the 6-position is preferred. Here, the degrees of substitution at the 2-, 3-, and 6-positions mean averages of the numbers of substituents substituting hydrogen atoms of the hydroxyl groups at the 2-, 3-, and 6-positions of the repeating unit (glucopyranose unit) of cellulose.
Preferably, the degree of substitution at the 6-position of the cellulose ester is 0.8 or less, more preferably 0.75 or less, and still more preferably 0.7 or less. The degree of substitution at the 6-position of the cellulose ester may be 0, or may be 0.1 or greater.

[Measurement method of degree of substitution]

The degree of substitution of the cellulose ester can be measured by the following method. For example, the measurement can be conducted according to the method described in Tezuka (Tezuka, Carbonydr. Res. 273, 83 (1995)) using NMR. That is, the free hydroxyl group of the cellulose ester is acylated with a carboxylic anhydride in pyridine. The type of the carboxylic anhydride used here should be selected according to the purpose of analysis. For example, when a degree of acetyl substitution of cellulose acetate is analyzed, butyric anhydride is suitable, and, when a degree of butyryl substitution of cellulose butyrate is analyzed, acetic anhydride is suitable. The resulting sample is dissolved in deuteriochloroform, and the $^{13}$C-NMR spectrum is measured. For example, when the substituent is an acetyl group, carbon signals of the acetyl group appear in the order of the 2-position, the 3-position, and the 6-position from a high magnetic field in a region of from 169 ppm to 171 ppm. In another example, when a cellulose ester having a propionyl group or a cellulose ester having no propionyl group is treated with propionic anhydride for the purpose of analyzing a degree of propionyl substitution, carbonyl carbon signals of the propionyl group appear in the same order in a region of from 172 ppm to 174 ppm. The total degree of substitution of the cellulose ester treated with the carboxylic anhydride by the method of Tezuka or a similar method is 3.0, and thus, if a sum of areas of the carbonyl carbon signals of the acyl group originally included in the cellulose ester and the carbonyl signals of the acyl group introduced by the treatment with carboxylic anhydride is normalized to 3.0, and a presence ratio of each acyl group at each corresponding position (in other words, area ratio of each signal) is determined, each of degrees of acyl substitution at the 2-, 3-, and 6-positions of a glucose ring in the cellulose ester can be obtained. It goes without saying, a substituent containing an acyl group that can be analyzed by this method is only a substituent group that does not correspond to the carboxylic anhydride used in the treatment for an analytical purpose. In addition, the degree of substitution can be analyzed by $^{1}$H-NMR in addition to $^{13}$C-NMR.

[Viscosity-average degree of polymerization of cellulose ester]

A viscosity-average degree of polymerization of the cellulose ester is not particularly limited, but is preferably 10 or greater and 400 or less. A resin composition including a cellulose ester having a viscosity-average degree of polymerization within this range is excellent in melt moldability. From this perspective, the viscosity-average degree of polymerization is more preferably 15 or greater and 300 or less, and even more preferably 20 or more and 200 or less. The viscosity-average degree of polymerization of the cellulose ester may be 10 or greater and 300 or less. It may be 10 or greater and 200 or less, 15 or greater and 400 or less, 15 or greater and 200 or less, 20 or greater and 400 or less, or 20 or greater and 300 or less.
The viscosity-average degree of polymerization (DPv) is determined based on a limiting viscosity number ([η], unit: cm$^3$/g) of the cellulose ester.
The limiting viscosity number ([η], unit: cm$^3$/g) is determined in accordance with JIS-K-7367-1 and ISO 1628-1. Specifically, the limiting viscosity number is determined by preparing a sample solution in which dimethyl sulfoxide (DMSO) is used as a solvent, measuring the logarithmic relative viscosity at 25°C using an Ubbelohde-type viscometer of size number 1C, and dividing the logarithmic relative viscosity at 25°C by the concentration of the sample solution.
Using the obtained limiting viscosity number [η], the viscosity-average molecular weight is calculated by the following equation in accordance with the literature of Kamide et al. (Polymer Journal, 13, 421-431 (1981)).

$$\text{Viscosity-average molecular weight} = (\text{limiting viscosity number } [\eta]/0.171)$$
$$(1/0.61)$$

Using the calculated viscosity-average molecular weight, the viscosity-average degree of polymerization (DPv) was determined by the following equation.

$$\text{Viscosity-average degree of polymerization (DPv)} = \text{viscosity-average}$$
$$\text{molecular weight}/(162.14 + 42.037 \times \text{DS})$$

In the equation, DS is the total degree of substitution of the cellulose ester described above.

[Weight average molecular weight of cellulose ester]

A weight average molecular weight of the cellulose ester is not particularly limited, but is preferably 100000 or greater and more preferably 120000 or greater from the perspective that a molded article having excellent tensile properties is obtained. From the perspective of providing appropriate fluidity at the time of melting, the weight average molecular weight of the cellulose ester is preferably 1500000 or less and more preferably 1200000 or less.

The weight average molecular weight of the cellulose ester can be determined by a known method. Specifically, the weight average molecular weight of the cellulose ester is determined by performing size exclusion chromatography (GPC) measurement using the following apparatus under the following conditions (GPC-light scattering method).

Apparatus: "SYSTEM-21H", GPC available from Shodex
Solvent: acetone
Column: two GMHxl (Tosoh Corporation), guard column (TSK gel guard column HXL-H available from Tosoh Corporation)
Flow rate: 0.8 ml/min.
Temperature: 29°C
Sample concentration: 0.25% (wt/vol)
Injection volume: 100 $\mu$l
Detection: MALLS (multi-angle light scattering detector) ("DAWN-EOS" available from Wyatt Technology Corporation)
Reference material for MALLS calibration: PMMA (molecular weight: 27600)

[Content of cellulose ester]

A content of the cellulose ester in the thermoplastic resin composition according to an embodiment of the present disclosure is preferably 30 wt.% or more and 90 wt.% or less, with respect to the total of the resin composition. From the perspective of providing a high-strength molded article, the content of the cellulose ester is more preferably 35 wt.% or more. From the perspective of providing good extensibility, the content of the cellulose ester is more preferably 85 wt.% or less. The content of the cellulose ester in the resin composition according to an embodiment of the present disclosure may be from 30 to 85 wt.%, from 35 to 90 wt.%, or from 35 to 85 wt.%. When two or more types of cellulose esters are used in combination, a total amount thereof is preferably adjusted to the above-described numerical range.

[Polyester]

The polyester included in the thermoplastic resin composition according to an embodiment of the present disclosure is not particularly limited, and any polyester exhibiting biodegradability can be suitably used. The polyester may be an aliphatic polyester or an aliphatic aromatic polyester. From the perspective of the polymer structure, the polyester may be a polyester having, as a repeating unit, a structural unit obtained by polycondensation of a hydroxycarboxylic acid, or may be a polyester having, as a repeating unit, a structural unit obtained by dehydration condensation of a dicarboxylic acid and a diol.

Examples of the polyester having, as a repeating unit, a structural unit obtained by polycondensation of a hydroxycarboxylic acid include polyglycolic acid, polylactic acid, poly($\beta$-hydroxybutyric acid), poly($\beta$-hydroxyvaleric acid), poly(lactic acid-co-glycolic acid), poly($\beta$-hydroxybutyric acid-co-$\beta$-hydroxyvaleric acid), poly($\beta$-propiolactone), and poly($\epsilon$-

caprolactone). Examples of the polyester having, as a repeating unit, a structural unit obtained by dehydration condensation of a dicarboxylic acid and a diol include polyethylene succinate, polybutylene succinate, poly(butylene succinate-co-butylene adipate), and polybutylene adipate terephthalate. From the perspective of easy polymer design, the polyester having, as a repeating unit, a structural unit obtained by dehydration condensation of a dicarboxylic acid and a diol is preferred.

The polyester having, as a repeating unit, a structural unit obtained by dehydration condensation of a dicarboxylic acid and a diol is preferred. Because of excellent biodegradability and low environmental load, a proportion of a structural unit containing an aromatic ring in the polyester is preferably 50% or less, more preferably 45% or less, and still more preferably 40% or less, with respect to all structural units, and may be 0%.

Examples of the dicarboxylic acid component constituting the polyester include oxalic acid, malonic acid, succinic acid, glutaric acid, adipic acid, sebacic acid, and terephthalic acid. Preferred is a dicarboxylic acid selected from the group consisting of succinic acid, adipic acid and terephthalic acid.

Examples of the diol component constituting the polyester include ethylene glycol, diethylene glycol, triethylene glycol, propylene glycol, ethylene propylene glycol, and butylene glycol. Preferred is a diol selected from the group consisting of ethylene glycol, propylene glycol and butylene glycol.

A polyester selected from the group consisting of polybutylene succinate (PBS), poly(butylene succinate-co-butylene adipate) (PBSA), and polybutylene adipate terephthalate (PBAT) is preferred from the perspective that good extensibility is imparted to the obtained molded article. Two or more types of polyesters may be used in combination. Another polyester may be blended as long as the effects of the present disclosure are not impaired.

[Weight average molecular weight of polyester]

From the perspective that a molded article having excellent strength can be obtained, the weight average molecular weight of the polyester is preferably 100000 or more, and more preferably 120000 or more. From the perspective of easy kneading with the cellulose ester, the weight average molecular weight of the polyester is preferably 1000000 or less, and more preferably 800000 or less. The weight average molecular weight of the polyester is measured by the method described above for the cellulose ester.

From the perspective of uniform mixing with the cellulose ester and the plasticizer, the number of carbon atoms of the dicarboxylic acid component constituting the polyester is preferably 8 or less, and more preferably 6 or less.

From the perspective of uniform mixing with the cellulose ester and the plasticizer, the number of carbon atoms of the diol component constituting the polyester is preferably 8 or less, and more preferably 6 or less.

[Content of polyester]

In the thermoplastic resin composition according to an embodiment of the present disclosure, the amount of the polyester is 120 parts by weight or less per 100 parts by weight of the cellulose ester. From the perspective that high strength can be obtained, the amount is preferably 100 parts by weight or less, and more preferably 80 parts by weight or less. From the perspective that good extensibility is imparted to the molded article, the amount of the polyester is preferably 3 parts by weight or more, more preferably 5 parts by weight or more, and still more preferably 10 parts by weight or more per 100 parts by weight of the cellulose. The amount of the polyester per 100 parts by weight of the cellulose ester may be more than 0 parts by weight and 120 parts by weight or less, more than 0 parts by weight and 100 parts by weight or less, more than 0 parts by weight and 80 parts by weight or less, from 3 to 120 parts by weight, from 3 to 100 parts by weight, from 3 to 80 parts by weight, from 5 to 120 parts by weight, from 5 to 100 parts by weight, from 5 to 80 parts by weight, from 10 to 120 parts by weight, from 10 to 100 parts by weight, or from 10 to 80 parts by weight. When two or more types of polyesters are blended, a total amount thereof is adjusted to the above-described range.

[Plasticizer]

The plasticizer included in the thermoplastic resin composition according to an embodiment of the present disclosure is a compound having a number average molecular weight of 1000 or less, and, from the perspective of a great improvement effect of the plasticity of cellulose acetate, the number average molecular weight thereof is preferably 800 or less and more preferably 700 or less. From the perspective of reducing bleeding from the obtained molded article, the number average molecular weight of the plasticizer is preferably 50 or more, more preferably 100 or more, and particularly preferably 200 or more. The number average molecular weight of the plasticizer is measured by the method described above for the cellulose ester.

The type of the plasticizer included in the thermoplastic resin composition according to an embodiment of the present disclosure is not particularly limited as long as the plasticizer has a number average molecular weight of 1000 or less, but a plasticizer that improves the plasticity of cellulose acetate is preferred, and a plasticizer that improves the plasticity of both cellulose acetate and polyester is more preferred. A plasticizer selected from the group consisting of citric acid esters, glycerin esters, adipic acid esters and polyethylene glycol esters is preferred. Two or more types of plasticizers may be used in combination. Another plasticizer can be included in the composition as long as the effects of the present disclosure are not impaired.

Specific examples of the citric acid ester include acetyl triethyl citrate, acetyl tributyl citrate, isodecyl citrate, isopropyl citrate, triethyl citrate, triethylhexyl citrate, and tributyl citrate. Specific examples of the glycerin ester include triacetin, diacetin, and monoacetin. Specific examples of the adipic acid ester include dimethyl adipate, dibutyl adipate, diisostearyl adipate, diisodecyl adipate, diisononyl adipate, diisobutyl adipate, diisopropyl adipate, diethylhexyl adipate, dioctyl adipate, dioctyldodecyl adipate, dicapryl adipate, and dihexyldecyl adipate. Specific examples of the polyethylene glycol ester include triethylene glycol monoacetate, triethylene glycol diacetate, triethylene glycol dipropionate, triethylene glycol dibenzoate, and tetraethylene glycol diacetate.

[Content of plasticizer]

In the thermoplastic resin composition according to an embodiment of the present disclosure, the amount of the plasticizer is less than 100 parts by weight per 100 parts by weight of the cellulose ester. From the perspective of excellent formability, the amount of the plasticizer is preferably 90 parts by weight or less, and more preferably 80 parts by weight or less. From the perspective that the cellulose ester and the polyester can be uniformly molten, the amount of the plasticizer is preferably 5 parts by weight or more, more preferably 10 parts by weight or more, and particularly preferably 15 parts by weight or more per 100 parts by weight of the cellulose. The amount of the plasticizer per 100 parts by weight of the cellulose ester may be more than 0 parts by weight and less than 100 parts by weight, more than 0 parts by weight and 90 parts by weight or less, more than 0 parts by weight and 80 parts by weight or less, 5 parts by weight or more and less than 100 parts by weight, from 5 to 90 parts by weight, from 5 to 80 parts by weight, 10 parts by weight or more and less than 100 parts by weight, from 10 to 90 parts by weight, from 10 to 80 parts by weight, 15 parts by weight or more and less than 100 parts by weight, from 15 to 90 parts by weight, or from 15 to 80 parts by weight. When two or more types of plasticizers are used in combination, a total amount thereof is adjusted to the above-described range.

[Method for producing thermoplastic resin composition]

The thermoplastic resin composition according to an embodiment of the present disclosure is obtained by melt-kneading the cellulose ester, the polyester, and the plasticizer having a number average molecular weight of 1000 or less in the above-described blending amounts. Preferably, the resin composition is obtained by melt-kneading the cellulose ester and the plasticizer, and then melt-kneading the resulting molten mixture and the polyester. In this case, the cellulose ester and the plasticizer may be mixed and then melt-kneaded. By mixing before melt-kneading, the plasticizer and the cellulose ester are more uniformly mixed with each other in a short time, thereby homogenizing the resulting kneaded product. This further facilitates the melt-kneading with the polyester.

A known mixer such as a Henschel mixer can be used for mixing the cellulose ester and the plasticizer. Dry mixing or wet mixing may be used. In using a mixer such as a Henschel mixer, the temperature in the mixer is preferably a temperature at which the cellulose ester does not melt, for example, in a range of 20°C or higher and lower than 200°C.

An extruder such as a twin-screw extruder can be used for melt-kneading of the cellulose ester and the plasticizer and melt-kneading of the kneaded product of the cellulose ester and the plasticizer and the polyester. From the perspective of homogeneity of the kneaded product and suppression of deterioration due to heating, the kneading temperature (cylinder temperature) of the extruder is preferably 170°C or higher and 230°C or lower. When melt-kneading is performed using a twin-screw extruder, the kneading temperature (also referred to as cylinder temperature) may be 200°C. The kneaded product may be extruded into a strand shape through a die attached to the tip of the twin-screw extruder and then hot-cut into pellets. Here, the die temperature may be approximately 220°C.

The amount of the polyester blended in the thermoplastic resin composition according to an embodiment of the present disclosure is 120 parts by weight or less per 100 parts by weight of the cellulose ester. When two or more types of polyesters are blended, a total amount thereof is adjusted to 120 parts by weight or less.

The amount of the plasticizer blended in the thermoplastic resin composition according to an embodiment of the present disclosure is less than 100 parts by weight per 100 parts by weight of the cellulose ester. When two or more types of plasticizers are blended, a total amount thereof is adjusted to less than 100 parts by weight.

A known additive such as a colorant, an ultraviolet absorber, a light stabilizer, an antioxidant, a heat stabilizer, an optical property adjuster, a fluorescent brightener, a flame retardant, a lubricant, a hydrolysis inhibitor, or a water repellent may be blended in the resin composition, as long as the effects of the present invention are not inhibited. In that case, it is preferable to blend the additive in such a manner that a total content of the cellulose ester, the polyester, and the plasticizer is 90 wt.% or more in the resin composition.

[Application]

The thermoplastic resin composition according to an embodiment of the present disclosure can be melt molded at a relatively low temperature. The thermoplastic resin composition according to an embodiment of the present disclosure has appropriate fluidity at the time of melting, and thus can be suitably applied to injection molding. A molded article obtained by using the thermoplastic resin composition has excellent biodegradability and good extensibility, and thus can be applied to the production of a film or a sheet by injection molding and film formation by melting. Further, a thin film can be obtained by stretching or inflation molding after melt-extrusion.

The thermoplastic resin composition according to an embodiment of the present disclosure can be suitably used as a material for, for example, tableware, packaging containers, trays, agricultural materials, fishery materials, OA parts, building materials, medical parts, home electric appliance parts, automobile members, daily goods, stationery, and eyeglass frames.

Examples

Hereinafter, the present invention will be specifically described with reference to examples, but the technical scope of the present invention is not limited by these examples. Hereinafter, unless otherwise specified, all tensile property evaluation tests were performed in a room (temperature: 25°C $\pm$ 5°C, humidity: 50% RH).

Example 1

First, 100 parts by weight of cellulose acetate (total degree of acetyl substitution = 2.44, degree of substitution at the 2-position = 0.85, degree of substitution at the 3-position = 0.85, degree of substitution at the 6-position = 0.73, weight average molecular weight: 175000) and 25 parts by weight of triacetin (available from Daicel Corporation, molecular weight: 218.21) as a plasticizer were blended in a dry state, dried at 80°C for 3 hours or longer, and further stirred and mixed using a Henschel mixer, and a mixture of cellulose acetate and the plasticizer was obtained. The resulting mixture was fed to a twin-screw extruder (trade name "PCM30" available from Ikegai Corporation, cylinder temperature: 200°C, die temperature: 220°C), melt-kneaded, and extruded into a strand shape, the strandshaped product was hot-cut, and pellets were obtained.

The obtained pellets and polybutylene succinate (available from Sigma-Aldrich Japan) as a polyester were blended in a dry state, then supplied to a twin-screw extruder (PCM30 available from Ikegai Corporation, cylinder temperature: 200°C, die temperature: 220°C), melt-kneaded and extruded, and a thermoplastic resin composition of Example 1 was obtained. The amount of polybutylene succinate blended was 22 parts by weight per 100 parts by weight of cellulose acetate.

[Example 2 and Comparative Examples 1 to 4]

Thermoplastic resin compositions of Example 2 and Comparative Examples 1 to 4 were obtained in the same manner as in Example 1 except that the compositions of cellulose acetate, triacetin, and polybutylene succinate were as shown in Table 1 below. In Comparative Example 2, cellulose acetate and polybutylene succinate were not uniformly molten.

[Evaluation of tensile property]

Each of the thermoplastic resin compositions of Examples 1 and 2 and Comparative Examples 1 to 4 was injection molded (cylinder temperature: 230°C, mold temperature: 50°C), thereby preparing a dumbbell-shaped test piece. Since the resin composition of Comparative Example 2 was not uniformly molten at the time of molding and could not be molded into a shape conforming to the mold, the following tensile test was not performed.

Using a tensile tester (trade name "Tensilon Universal Material Tester" available from A&D Company, Limited), a tensile test (tensile speed: 10 mm/min, distance between grips: 115 mm) was performed in accordance with the provisions of ISO527-1, and the strength at break (unit: MPa), the nominal strain at break (%) and the elastic modulus (MPa) of each of Examples 1 and 2 and Comparative Examples 1, 3 and 4 were measured. An average of five measurement values of each of the properties is shown in Table 1 below.

Table 1

| | | Comparative Example 1 | Comparative Example 2 | Example 1 | Example 2 | Comparative Example 3 | Comparative Example 4 |
|---|---|---|---|---|---|---|---|
| Cellulose acetate | Parts by weight | 100 | 100 | 100 | 100 | 100 | 0 |
| Triacetin | Parts by weight | 25 | 0 | 25 | 25 | 25 | 0 |
| Polybutylene succinate | Parts by weight | 0 | 25 | 22 | 42 | 125 | 100 |
| Strength at break | (MPa) | 39 | - | 41 | 40 | 28 | 25 |
| Nominal strain at break | (%) | 12 | - | 25 | 18 | 7 | 300 |
| Elastic Modulus | (MPa) | 1585 | - | 1550 | 1460 | 1350 | 700 |

(Conclusion)

It was confirmed that the resin compositions of Examples 1 and 2 had high plasticity and could be uniformly melt molded at a temperature of 180°C. In addition, as shown in Table 1, it was found that the resin compositions of the examples had a high strength at break and excellent extensibility (nominal strain at break) as compared with those of Comparative Example 1 including no polyester and Comparative Example 3 excessively including the polyester. Furthermore, it was found that the resin compositions of the examples had a higher elastic modulus than that of Comparative Example 4 including the polyester alone.

As shown in Table 1, the resin compositions of the examples are highly evaluated as compared with the resin compositions of the comparative examples. From this evaluation result, the superiority of the present invention is clear.

Industrial Applicability

The resin composition described above may be applied to various fields using melt molding, injection molding, and film formation by melting.

**Claims**

1.   A thermoplastic resin composition comprising: a cellulose ester, a polyester, and a plasticizer, wherein

    the plasticizer has a number average molecular weight of 1000 or less,
    an amount of the polyester is 120 parts by weight or less per 100 parts by weight of the cellulose ester, and
    an amount of the plasticizer is less than 100 parts by weight per 100 parts by weight of the cellulose ester.

2.   The thermoplastic resin composition according to claim 1, wherein a total degree of substitution of the cellulose ester is 1.9 or greater and 2.6 or less.

3.   The thermoplastic resin composition according to claim 1 or 2, wherein a degree of substitution at the 2-position and a degree of substitution at the 3-position of the cellulose ester are both greater than a degree of substitution at the 6-position thereof.

4.   The thermoplastic resin composition according to any one of claims 1 to 3, wherein the plasticizer is one or more selected from citric acid esters, glycerin esters, adipic acid esters and polyethylene glycol esters.

5.   The thermoplastic resin composition according to any one of claims 1 to 4, wherein the polyester has, as a repeating structure, a structural unit obtained by dehydration condensation of a dicarboxylic acid and a diol, and a proportion of a structural unit containing an aromatic ring is 50% or less with respect to all structural units.

6.   The thermoplastic resin composition according to claim 5, wherein

    the dicarboxylic acid is selected from the group consisting of succinic acid, adipic acid and terephthalic acid, and
    the diol is selected from the group consisting of ethylene glycol, propylene glycol and butylene glycol.

7.   The thermoplastic resin composition according to any one of claims 1 to 6, wherein the polyester is selected from the group consisting of polybutylene succinate (PBS), poly(butylene succinate-co-butylene adipate) (PBSA) and polybutylene adipate terephthalate (PBAT).

8.   The thermoplastic resin composition according to any one of claims 1 to 7, wherein the cellulose ester is cellulose acetate.

## INTERNATIONAL SEARCH REPORT

| International application No. |
| --- |
| PCT/JP2021/010150 |

A. CLASSIFICATION OF SUBJECT MATTER
C08L 1/10(2006.01)i
FI: C08L1/10

According to International Patent Classification (IPC) or to both national classification and IPC

B. FIELDS SEARCHED

Minimum documentation searched (classification system followed by classification symbols)
C08L1/10

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2007-161943 A (DAICEL CHEM IND LTD) 28 June 2007 (2007-06-28) claims, paragraphs [0032], [0038]-[0041], [0048], [0059], examples | 1-8<br>3 |
| X<br>Y | JP 7-76632 A (DAICEL CHEM IND LTD) 20 March 1995 (1995-03-20) claims, paragraphs [0045]-[0051], examples | 1-2, 4-8<br>3 |
| X<br>Y | JP 2012-255142 A (FUJIFILM CORP) 27 December 2012 (2012-12-27) claims, examples | 1-2, 4-8<br>3 |
| X<br>Y | JP 2018-131484 A (FUJI XEROX CO LTD) 23 August 2018 (2018-08-23) claims, paragraphs [0057], [0082], examples | 1-2, 4-8<br>3 |
| X<br>Y | JP 2006-111858 A (TORAY IND INC) 27 April 2006 (2006-04-27) claims, examples | 1-2, 4-8<br>3 |

☒ Further documents are listed in the continuation of Box C.  ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>17 May 2021 (17.05.2021) | Date of mailing of the international search report<br>25 May 2021 (25.05.2021) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2021/010150 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-201301 A (DAICEL CHEM IND LTD) 18 July 2003 (2003-07-18) entire text | 1-8 |
| A | JP 9-286801 A (DAICEL CHEM IND LTD) 04 November 1997 (1997-11-04) entire text | 1-8 |

Form PCT/ISA/210 (continuation of second sheet) (January 2015)

**INTERNATIONAL SEARCH REPORT**
Information on patent family members

| International application No. |
|---|
| PCT/JP2021/010150 |

| Patent Documents referred in the Report | Publication Date | Patent Family | Publication Date |
|---|---|---|---|
| JP 2007-161943 A | 28 Jun. 2007 | (Family: none) | |
| JP 7-76632 A | 20 Mar. 1995 | US 5478386 A<br>claims, column 6,<br>line 23 to column 7,<br>line 9, examples<br>EP 597478 A1<br>DE 69316836 C<br>PH 30463 A<br>KR 10-1994-0011541 A<br>CN 1088595 A<br>CA 2102927 A1 | |
| JP 2012-255142 A | 27 Dec. 2012 | US 2014/0058022 A1<br>claims, examples<br>WO 2012/157602 A1<br>CN 103635520 A | |
| JP 2018-131484 A | 23 Aug. 2018 | US 2018/0230295 A1<br>claims, paragraphs<br>[0128]-[0130],<br>[0165], examples<br>EP 3360924 A1<br>CN 108424548 A | |
| JP 2006-111858 A | 27 Apr. 2006 | US 2008/0262151 A1<br>claims, examples<br>WO 2006/030951 A1<br>EP 1792941 A1<br>KR 10-2007-0065325 A<br>CN 101023133 A<br>AT 509985 T | |
| JP 2003-201301 A | 18 Jul. 2003 | US 2004/0024198 A1<br>WO 2002/072638 A1<br>EP 1285931 A1<br>CN 1462278 A | |
| JP 9-286801 A | 04 Nov. 1997 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001294792 A

- JP 2003276094 A

**Non-patent literature cited in the description**

- **TEZUKA.** *Carbonydr. Res.,* 1995, vol. 273, 83

- **KAMIDE et al.** *Polymer Journal,* 1981, vol. 13, 421-431